# EUROPEAN PATENT APPLICATION

(11) **EP 4 498 446 A1**
(43) Date of publication of application: **29.01.2025**
(21) Application number: 24188853.6
(22) Date of filing: 16.07.2024
(51) Int. Cl.: H01M 4/133, H01M 4/1391, H01M 4/36, H01M 4/48, H01M 4/505, H01M 4/525

(54) **SLURRY FOR POSITIVE ELECTRODES OF LITHIUM-ION BATTERIES**

(30) Priority: 20.07.2023 JP 2023118528
(71) Applicant: Hohsen Corp., Osaka-shi Osaka 542-0081 (JP)
(72) Inventor: Nakamura, Hitoshi, Toyota-shi, Aichi, 471-0832 (JP); Tanida, Katsumi, Osaka-shi, Osaka, 542-0081 (JP)
(74) Representative: Müller-Boré & Partner Patentanwälte PartG mbB

(57) **Abstract**

[Summary]

[Problem to be solved] To provide a slurry for positive electrodes of lithium-ion batteries, which has a low impact on the environment, is excellent in safety and ease of handling, and can provide a lithium-ion battery that exhibits battery performance equivalent to that of a lithium-ion battery with a positive electrode formed from an organic solvent-based slurry for electrodes.

[Means for solution] A slurry for positive electrodes of lithium-ion batteries, comprising a positive electrode material, a binder, a solvent and a pH adjuster, wherein the positive electrode material comprises covered particles having lithium composite oxide particles and passivation film which covers at least a part of their surface, the solvent comprises water, the pH adjuster comprises an organic acid.

## Description

### [Technical field]

The present invention relates to positive electrodes of lithium-ion batteries, and in particular to slurry for positive electrodes of lithium-ion batteries containing positive electrode materials, binders, solvents and pH adjusters.

### [Background art]

The rapid development of electric vehicles in recent years has led to a dramatic increase in the production of lithium-ion batteries, which serve as the core devices. A lithium-ion battery composed of a positive electrode, a negative electrode, an electrolytic solution, a separator, and surrounding members. In general, the positive electrode is formed by mixing an oxide containing lithium ions as an active material, carbon as a conductive material, an appropriate amount of an adhesive, and a solvent to make slurry, which is then used as a coating solution to apply onto a thin aluminum foil, followed by drying.

For adhesives, fluorine-based polymers such as polyvinylidene fluoride (PvDF) are used considering their adhesiveness to an active material, resistance to polar solvents used as an electrolytic solution, and stability in electrochemical environments. An organic solvent capable of dissolving PVdF is used as the solvent. The most common organic solvent is N-methylpyrrolidone (NMP).

NMP has recently been pointed out as an environmental hormone for its harmfulness, and it is mandatory to collect it after use. In contrast, water, which has a smaller environmental burden and is easy for post processing, is attracting attention as a solvent for the aforementioned coating solution.

However, the lithium composite oxide, a positive electrode active material, has a problem that it reacts with water and thereby battery characteristics deteriorate. The lithium composite oxide has lithium hydroxide as a synthetic unreacted substance, which increases the pH value upon contact with water. When strongly alkaline slurry is used, an aluminum current collector corrodes during coating, resulting in the problems such as reduced capacity or lifespan of the lithium-ion battery.

Patent Document 1 discloses that a positive electrode active material is neutralized with a sulfuric acid aqueous solution and washed the neutralized product out with water to lower the pH of a slurry for positive electrodes, and, thereby, corrosion of a current collector is suppressed. However, when an inorganic acid such as sulfuric acid is used as a neutralizer for a slurry for positive electrodes, a positive electrode active material may dissolve when it is added. Also, it has a strong pH-lowering effect, thus posing a problem of having difficulty in adjusting the pH value to the desired level.

Patent Document 2 discloses that, in an organic solvent-based slurry for electrodes using a vinylidene fluoride-based binder and a NMP solvent, an organic acid is added to prevent increasing of the viscosity during coating, and to prevent reducing of the adhesive effect due to swelling of the vinylidene fluoride-based binder in the electrolytic solution of formed electrodes.

Patent Document 3 discloses that the positive electrode active material particles are covered with transition metal oxide to prevent contact between a positive electrode active material layer and water even when the positive electrode is coated using a slurry composed of an aqueous solvent, and that the slurry does not exhibit strong alkalinity, thus preventing current collector corrosion and the like.

### [Prior art documents]

### [Patent documents]

[Patent Document 1] JP 2009-230863 A
[Patent Document 2] JP H9-180725 A
[Patent Document 3] WO 2012/111116 A

### [Summary of invention]

### [Problem to be solved by invention]

The method of lowering the pH of the positive electrode slurry in Patent Document 1 uses an inorganic acid with a strong pH-lowering action as the pH adjuster, which is difficult to handle, unsafe, and has a large environmental burden. On the other hand, an organic acid is a pH adjuster that has a milder pH-lowering effect exhibiting a buffering effect, is easier to handle, safer, and also has a smaller environmental burden.

However, in an aqueous positive electrode slurry for positive electrodes using water as a solvent, organic acids need to be added in large amounts in order to use the organic acids to lower the pH to the desired value. As a result, the organic acids and neutralized salts remain in the formed positive electrode, resulting in the problem of reduced battery performance, particularly electrode energy density, in lithium-ion batteries.

The present invention solves the above problem, and it is an object thereof to provide a slurry for positive electrodes of lithium-ion batteries that has a low impact on the environment, is excellent in safety and ease of handling, and can provide a lithium-ion battery that exhibits battery performance equivalent to that of a lithium-ion battery with a positive electrode formed from an organic solvent-based slurry for electrodes.

### [Means for solving problem]

[Embodiment 1] A slurry for positive electrodes of lithium-ion batteries, comprising a positive electrode material, a binder, a solvent and a pH adjuster, whrein
the positive electrode material comprises covered particles having lithium composite oxide particles and passivation film which covers at least a part of their surface,
the solvent comprises water,
the pH adjuster comprises an organic acid.

[Embodiment 2] The slurry for positive electrodes of lithium-ion batteries of embodiment 1, wherein the solvent is substantially free of organic solvent.

[Embodiment 3] The slurry for positive electrodes of lithium-ion batteries of embodiment 1 or 2, wherein the pH adjuster is substantially free of inorganic acid.

[Embodiment 4] The slurry for positive electrodes of lithium-ion batteries of any one of embodiments 1 to 3, having an organic acid concentration of 2 to 8% by weight.

[Embodiment 5] The slurry for positive electrodes of lithium-ion batteries of any one of embodiments 1 to 4, having a pH of 6 to 9.

[Embodiment 6] The slurry for positive electrodes of lithium-ion batteries according to any one of embodiments 1 to 5, wherein the passivation film has a cover amount of 1 to 20% by weight.

[Embodiment 7] The slurry for positive electrodes of lithium-ion batteries of any one of embodiments 1 to 6, wherein the passivation film comprises aluminum oxide or magnesium oxide.

[Embodiment 8] The slurry for positive electrodes of lithium-ion batteries of any one of embodiments 1 to 7, wherein the organic acid is at least one selected from the group consisting of acrylic acid, formic acid, citric acid, acetic acid, oxalic acid, lactic acid, pyruvic acid, malonic acid, propionic acid, maleic acid and butyric acid.

[Embodiment 9] The slurry for positive electrodes of lithium-ion batteries of any one of embodiments 1 to 8, wherein the positive electrode active material comprises Ni:Co:Mn in a weight ratio of about 8:1:1.

[Embodiment 10] A positive electrode of a lithium-ion battery obtained by using the slurry for positive electrodes of lithium-ion batteries of any one of embodiments 1 to 9.

[Embodiment 11] A lithium-ion battery comprising the positive electrode of a lithium-ion battery of embodiment 10.

[Embodiment 12] A method for producing a slurry for positive electrodes of lithium-ion batteries, comprising: mixing a positive electrode material having lithium composite oxide and passivation film which covers at least a part of its surface, water as a solvent, and organic acid as a pH adjuster.

[Embodiment 13] A method for producing a positive electrode for lithium-ion batteries, comprising forming a layer of the slurry for positive electrodes of any one of embodiments 1 to 9 on a current collector composed of aluminum or an aluminum alloy, and drying it.

### [Effects of invention]

According to the present invention, there is provided a slurry for positive electrodes of lithium-ion batteries, which has a low impact on the environment, is excellent in safety and ease of handling. By using the slurry for positive electrodes of lithium-ion batteries of the present invention, a lithium-ion battery can be provided, which exhibits battery performance equivalent to that of a lithium-ion battery with a positive electrode formed from an organic solvent-based slurry for electrodes.

### [Brief description of drawing]

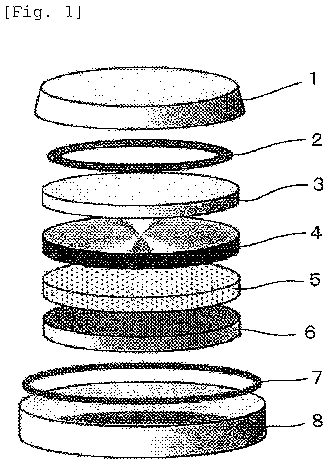

[Fig. 1] An exploded view schematically showing the configuration of a lithium-ion battery that is an embodiment of the present invention.

### [Description of embodiments]

The scope of the invention is not limited to the embodiments described here, and various modifications may be made without departing from the intent of the present invention. When a plurality of upper and lower limit values is listed for a particular parameter, any upper and lower limit value of these upper and lower limit values may be combined to form a preferred numerical range.

The slurry for positive electrodes of lithium-ion batteries of the present invention comprises a positive electrode material, a binder, an aqueous solvent and a pH adjuster.

### <Positive Electrode Material>

The positive electrode material is an electrode material that includes a positive electrode active material. The active material refers to a material that directly contributes to electrode reactions such as charge and discharge reactions. The positive electrode material used in the present invention includes covered particles having positive electrode active material particles and passivation film which covers at least a part of their surface. Contact of the positive electrode active material and the aqueous solvent is suppressed, and, thereby, deterioration of the positive electrode active material is prevented, and pH increase of the slurry is suppressed.

The type of positive electrode active material is not particularly limited, but preferably lithium composite oxide is used. The lithium composite oxide refers to composite oxide containing lithium and transition metals (e.g., nickel, cobalt, manganese and the like). The lithium composite oxide has poor water resistance, and the remarkable effect is achieved by suppressing contact with aqueous solvents.

Specific examples of lithium composite oxide include lithium cobaltate (LiCoO₂), lithium nickel oxide (LiNiO₂), a ternary material (LiNi_{0.33}Co₂Mn_{0.33}O₂), a nickel-rich ternary material (LiNi_{0.5}Co_{0.2}Mn_{0.3}O₂), a high nickel ternary material (LiNi_{0.8}Co_{0.1}Mn_{0.1}O₂), lithium nickel-cobalt-aluminum oxide (LiNi_{0.8}Co_{0.15}Al_{0.05}O₂), lithium iron phosphate (LiFePO₄), lithium iron-manganese phosphate (LiFe_{0.5}Mn_{0.5}PO₄), lithium manganese phosphate (LiMnPO₄), lithium cobalt phosphate (LiCoPO₄), lithium nickel phosphate (LiNiPO₄), lithium vanadium phosphate (Li₃V₂(PO₄)₃), lithium iron silicate (Li₂FeSiO₄), lithium manganese silicate (Li₂MnSiO₄), a lithium-rich solid solution system (Li₂MnO₃-LiNi_{0.33}Mn_{0.33}Co_{0.33}O₂), a spinel-type lithium manganese oxide (LiMn₂O₄), a spinel-type lithium nickel-manganese oxide LiNi_{0.5}Mn_{1.5}O₄), lithium nickel-iron-manganese oxide (LiNi_{0.33}Fe_{0.33}Mn_{0.33}O₂) and the like, which may be used alone or in combination of two or more. Among them, preferred lithium composite oxides include the high nickel ternary material and the lithium iron phosphate.

The passivation film which covers the positive electrode active material is a film composed of amphoteric oxide. The amphoteric oxide refers to a metal oxide that forms salt by acting as either acid or base in the neutralization reaction. Metals which compose amphoteric oxide include copper, zinc, lead, tin, beryllium, and aluminum. Preferred amphoteric oxides include aluminum oxide, titanium oxide, and zinc oxide.

The passivation film which covers the positive electrode active material may be formed, for example, as follows. First, a water-soluble compound of a metal composing an amphoteric oxide is prepared and dissolved in water. The resulting coating solution and positive electrode active material particles are mixed, and the surface of the particles is coated with the coating solution. The wet-coated particles are dried, and then calcined to convert the wet film on the particle surface into a metal oxide film. Examples of the water-soluble compound of the metal include aluminum nitrate, aluminum phosphate and the like.

The cover amount of the passivation film may be adjusted by increasing or decreasing the metal compound concentration of the coating solution or the mixing amount of the coating solution. The cover amount of the passivation film may be determined by comparing the weight of electrode active material particles before coating and that of the particles after coating, and following the formula: Cover amount (% by weight) = {(weight of covered particles - weight of electrode active material particles)/weight of covered particles} x 100 (1).

The cover amount of the passivation film of the positive electrode active material is preferably adjusted to 1 to 20% by weight. If the cover amount of the passivation film is less than 1% by weight, the degree of contact of the positive electrode active material with the aqueous solvent increases, and the positive electrode active material easily deteriorates. In addition, the pH of the slurry increases significantly and a large amount of the pH adjuster is required to lower the pH to the desired value, resulting in reduced battery performance. If the cover amount of the passivation film exceeds 10% by weight, the positive electrode active material content in the positive electrode material becomes low, resulting in reduced battery performance. The cover amount of the passivation film is more preferably 2 to 8% by weight, and even more preferably 2 to 5% by weight.

### <Aqueous Solvent>

In the present description, the aqueous solvent refers to water or a solvent mainly composed of water. The use of the aqueous solvent can reduce the environmental burden in the positive electrode production process. From the viewpoint of the cost and environmental burden, it is preferable to use water alone as the aqueous solvent.

### <Binder>

Binders are materials that bind particles of a positive electrode material to each other and also bind the positive electrode material to a current collector. Water-soluble polymers and polymer particulates that may be mixed with an aqueous solvent are used as the binders. Specific examples of the water-soluble polymers include carboxymethyl cellulose and polyacrylic acid. Specific examples of the polymer particulates include nitrile rubber (NBR), styrenebutadiene rubber (SBR), polyacrylate and the like.

### <pH Adjuster>

A pH adjuster is a compound capable of causing neutralization reaction with hydroxide ions to lower the pH of slurry for positive electrodes. pH adjusters are preferably those which hardly remain in the molded electrode due to scattering by decomposition or evaporation during the process of applying the slurry as a coating solution onto the current collector, and drying it. It is also preferable to use those which hardly react with the electrode active material.

The pH adjuster used in the present invention is organic acid. That makes it easier to adjust the slurry to the desired pH value, enhances safety, and also reduces the environmental burden in the positive electrode production process. Examples of organic acids that are preferably used include acrylic acid, formic acid, citric acid, acetic acid, oxalic acid, lactic acid, pyruvic acid, malonic acid, propionic acid, maleic acid, butyric acid and the like. Among them, preferred organic acids are acetic acid, oxalic acid, malonic acid, and maleic acid. A particularly preferred organic acid is acetic acid.

The additive amount of the organic acid is the amount that will be a concentration of 1 to 9% by weight in the slurry. If the additive amount of the organic acid is less than 2% by weight, the pH increase of the slurry is not sufficiently suppressed, and if it exceeds 8% by weight, the organic acid and neutralized salts remain in the molded positive electrode, which may result in reduced battery performance of the lithium-ion battery. The additive amount of the organic acid is preferably 2 to 8% by weight, and more preferably 2 to 5% by weight.

The pH of the slurry for positive electrodes is preferably a value of 6 to 9. If the pH of the slurry for positive electrodes is less than 6, the content of the pH adjuster is high and the organic acid and neutralized salts remain in the molded positive electrode, which may result in reduced battery performance of the lithium-ion battery. If the pH of the slurry for positive electrodes exceeds 9, corrosion and dissolution of the aluminum current collector surface are likely to occur during coating. The pH of the slurry for positive electrodes is more preferably 6 to 8, and even more preferably 7 to 8.

### <Slurry for Positive Electrodes>

In addition to the positive electrode material, binder, aqueous solvent, and pH adjuster, the slurry for positive electrodes may contain components and additives, such as conductive materials, which are conventionally and regularly used.

For example, carbon black, graphite, carbon fiber, metal fiber and the like may be used as conductive materials. The carbon black includes, for example, acetylene black, Ketjen black, channel black, furnace black, lamp black, thermal black, and the like. The conductive materials may be used alone or in combination of two or more.

To prepare a slurry for positive electrodes, methods conventionally and regularly used in this field may be adopted. For example, a method includes mixing the above respective components using a mixing device such as a planetary mixer, a homo mixer, a pin mixer, a kneader, or a homogenizer. The mixing devices may be used alone or in combination of two or more. Furthermore, various dispersants, surfactants, stabilizers and the like may be added as necessary during kneading of the slurry for positive electrodes.

### <Positive Electrodes of Lithium-Ion Batteries>

A positive electrode of lithium-ion batteries may be produced with a method similar to conventional by using the slurry for positive electrodes of the present invention. For example, the slurry for positive electrodes is applied onto a current collector, dried to form a positive electrode mixture layer, and rolled as necessary to obtain a positive electrode. The positive electrode mixture layer may be formed on both sides in the thickness direction of the current collector. The thickness of the positive electrode mixture layer is preferably 20 to 150 um when formed on one side of the positive current collector, and preferably 50 to 250 µm in total when formed on both sides of the current collector.

As a current collector, those regularly used in the field of lithium-ion batteries may be used, and include, for example, sheets, foils and the like containing stainless steel, aluminum, aluminum alloys, titanium, and the like. The sheets may also be porous. Porous materials include, for example, foamed bodies, woven fabric, non-woven fabric and the like. The thickness of sheets and foils is not particularly limited, but is usually 1 to 500 µm, and preferably 8 to 60um. Among these, aluminum, aluminum alloys and the like are preferred. The surface of the current collector may be lath-processed or etched.

The slurry for positive electrodes may be applied onto a surface of the current collector using, for example, a slit die coater, a reverse roll coater, a lip coater, a blade coater, a knife coater, a gravure coater, and a dip coater. The slurry for positive electrodes coated onto the current collector is preferably dried close to natural drying, but considering the productivity, it is preferably dried at 100°C to 350°C for 10 minutes to 1 hour.

Rolling may be performed several times by a roll press machine at a linear pressure of 1000 to 6000 kg/cm or by changing the linear pressure until the positive electrode reaches a predetermined thickness of 130 µm to 200µm.

### <Lithium-Ion Battery>

A lithium-ion battery of the present invention may take the same configuration as a conventional lithium-ion battery, except that the positive electrode prepared using the slurry for positive electrodes of the present invention is used.

Fig. 1 is an exploded view of a lithium-ion battery that schematically shows an embodiment of the present invention. The lithium-ion battery shown in Fig. 1 is a coin-type lithium-ion battery and is made up of an electrode plate group using the above-mentioned positive electrode 4, an electrolytic solution (not shown), and battery cases that house them. The electrode plate group consists of a sheet-shaped positive electrode 4, a sheet-shaped negative electrode 6, and a sheet-shaped separator 5 that insulates between the positive electrode 4 and the negative electrode 6.

These are stacked together with a plate spring 2, a spacer 3, a gasket 7 and the like, which are regularly used in the field of lithium-ion batteries, and housed in battery cases 1 and 8.

The positive electrode 4 has the same configuration as the positive electrode of the present invention described above. That is, the positive electrode 4 includes a current collector and a positive electrode mixture layer, wherein the positive electrode mixture layer is supported on the surface of current collector and contains the above positive electrode material. This positive electrode 4 is fabricated, for example, by applying both sides of the current collector with a slurry for positive electrodes, drying it, followed by rolling to form the positive electrode mixture layer.

The negative electrode 6 is fabricated, for example, by applying a slurry for negative electrodes onto one or both sides of a current collector, drying it, followed by rolling to form a negative electrode mixture layer.

As current collectors of negative electrodes, those regularly used in the field of lithium-ion batteries may be used, and their thickness is preferably in the range of 10 µm to 50um. In addition, the surface of the current collector may be lath-processed or etched.

The slurry for negative electrodes is prepared by mixing a negative electrode active material, a binder, and a dispersion medium. In addition, conductive agents, thickeners and the like may be added to the slurry for negative electrodes as necessary.

The negative electrode active material is not particularly limited, but it is preferable to use a carbon material that is capable of occluding and releasing lithium ions through charging and discharging. For example, carbon materials obtained by calcining organic polymer compounds (phenol resin, polyacrylonitrile, cellulose and the like), carbon materials obtained by calcining coke or pitch, artificial graphite, natural graphite, pitch-based carbon fiber, PAN-based carbon fiber and the like are preferred. The shape of the negative electrode active material includes fibrous, spherical, scaly, lumpy and the like.

For binders, conductive materials, and dispersion media, those regularly used in this field may be used. For example, the same materials as conventional ones may be used. For example, the same binders, conductive materials and dispersion media as those used for the positive electrode 4 may be used.

As a separator 5, a microporous film composed of a polymer material is preferably used. The polymer material includes, for example, polyethylene, polypropylene, polyvinylidene fluoride, polyvinylidene chloride, polyacrylonitrile, polyacrylamide, polytetrafluoroethylene, polysulfone, polyethersulfone, polycarbonate, polyamide, polyimide, polyether (polyethylene oxide and polypropylene oxide), cellulose (carboxymethyl cellulose and hydroxypropyl cellulose), poly(meth)acrylic acid, poly(meth)acrylic ester and the like.

These polymer materials may be used alone or in combination of two or more. In addition, multilayer films obtained by superposing these microporous films may also be used. Microporous films composed of polyethylene, polypropylene, polyvinylidene fluoride and the like are particularly preferred. The thickness of the microporous film is preferably 10 µm to 30um.

Battery cases composed of copper, nickel, stainless steel, nickel-plated steel, and the like may be used. A metal sheet composed of these materials may be formed into the shape of a battery case by applying drawing or the like. To enhance the anticorrosive properties of the battery case, plating may be applied to the battery case after processing.

By using a battery case composed of aluminum or aluminum alloy, a lightweight, high energy density, rectangular secondary battery may be fabricated.

As non-aqueous solvents, those containing a cyclic carbonate and a chain carbonate as main components are preferred. For example, it is preferable to use at least one selected from ethylene carbonate, propylene carbonate, and butylene carbonate as the cyclic carbonate. Also, it is preferable to use at least one selected from the group consisting of dimethyl carbonate, diethyl carbonate, ethyl methyl carbonate and the like as the chain carbonate.

As a solute, for example, lithium salts whose anions have a functional group having a strong electron-withdrawing property are used. Examples of these include LiPF₆, LiBF₄, LiClO₄, LiAsF₆, LiCF₃SO₃, LiN(SO₂CF₃)₂, LiN(SO₂C₂F₅)₂, LiC(SO₂CF₃)₃ and the like. These solutes may be used alone or in combination of two or more. It is preferable to dissolve these solutes in the above non-aqueous solvents at a concentration of 0.5 to 1.5M.

### [Examples]

The present invention will be further described more specifically by the following examples, but the present invention is not limited to these examples.

### <Production Example 1>

### Production of Covered Positive Electrode Material 1

A high nickel ternary material having an average particle diameter of 3 um, a tapped density of 2.5 g/cc, and a Ni:Co:Mn weight ratio of 8:1:1 was obtained from the market. This serves as positive electrode material A. Positive electrode material A and 25% w/v aluminum nitrate aqueous solution were uniformly mixed, and the resulting dispersion was spray-dried. The dried particles were calcined at 600°C for 10 hours to form an aluminum oxide film on the particle surface. The resulting covered particles serve as covered positive electrode material 1.

In the covered positive electrode material 1, the cover amount of the aluminum oxide was adjusted by adjusting the concentration of the coating solution. The cover amount of the aluminum oxide was determined according to the above formula (1) by comparing the weight of the positive electrode material before and after coating.

### <Production Example 2>

### Production of Covered Positive Electrode Material 2

Covered particles were obtained in the same manner as in Production Example 1, except that 15% w/v aluminum nitrate-ethanol solution was used in place of the aluminum nitrate aqueous solution. The resulting covered particles serve as covered positive electrode material 2.

### <Production Example 3>

### Production of Covered Positive Electrode Material 3

A positive electrode material of lithium iron phosphate (LiFePO₄) having an average particle diameter of 3 um, and a tapped density of 1.8 g/cc was obtained from the market. This serves as positive electrode material B. Positive electrode material B and 25% w/v aluminum nitrate aqueous solution were uniformly mixed, and the resulting dispersion was spray-dried. The dried particles were calcined at 600°C for 10 hours to form an aluminum oxide film on the particle surface. The resulting covered particles serve as covered positive electrode material 3.

### <Examples, Comparative Examples>

### Electrode Coated from Aqueous Slurry

In Examples and Comparative Examples, as the positive electrode materials, the positive electrode materials A (Ni:Co:Mn weight ratio 8:1:1), B (lithium iron phosphate (LiFePO₄)), and covered positive electrode materials 1, 2, and 3 obtained by coating them with aluminum oxide were used.

A sodium salt of carboxymethyl cellulose (CMC-Na) and a nitrile rubber (NBR) dispersion as binders, and acetylene black (AB) as a conductive material were prepared. CMC-Na was dissolved in pure water to a concentration of 2% by weight. The positive electrode material and AB were dispersed in this solution, the NBR dispersion was added, and then acetic acid was added thereto to adjust the pH. The resulting slurry had a positive electrode material:AB:CMC:NBR weight ratio of 95:2:1:2 and a solid concentration of 60% w/v.

The slurry was applied onto an aluminum foil using a doctor blade to a dry thickness of 100 µm, and then dried. Subsequently, a 13 mm diameter disk was cut from the resulting laminated foil to obtain a positive electrode.

Usually used components such as a 250 um thick and 14 mm diameter metal lithium-made negative electrode, 1.0M LiPF₆/(EC:DEC=4:6) electrolytic solution, a separator, a gasket and cases were prepared. Using the resulting positive electrode, a lithium-ion battery cell was assembled. The weight-per-area ratio of the positive electrode to the negative electrode was adjusted to 1:1.1. An exploded perspective view of the cell is shown in Fig. 1.

Next, using a charge/discharge test apparatus, charge/discharge tests were conducted on cells under the following conditions to determine the initial capacity and the capacity retention rate after 100 charge/discharge cycles.
Current: 0.1 mAh
Mode: CCCVCC (0.05C cutoff) CC
Temperature: 35°C
Positive electrode voltage range: 3.0 V to 4.2 V

Type of positive electrode, values for cover amount, pH of slurry, initial capacity, and capacity retention rate are shown in Table 1. The initial capacity is expressed as a relative value, with the result obtained in the following reference example for the same type of positive electrode material being set as 100%. Also, the capacity retention rate is expressed as a relative value, with the initial capacity being set as 100%.

### <Reference Examples 1 and 2>

Positive Electrode Coated from Organic Solvent-Based Slurry As the positive electrode material, positive electrode material A (Ni:Co:Mn weight ratio 8:1:1) was used in Reference Example 1, and positive electrode material B (lithium iron phosphate (LiFePO₄)) in Reference Example 2.

Polyvinylidene fluoride (PVDF) as a binder and N-methylpyrrolidone (NMP) as a solvent were prepared. The positive electrode material, a 12% by weight PVDF-NMP solution, and AB were mixed. The resulting slurry had a positive electrode material:AB:PVDF weight ratio of 95:2:3 and a solid concentration of 60% w/v.

Lithium-ion battery cells were fabricated and tested in the same manner as in the Examples except that this slurry was used. A cell using positive electrode material A had an initial capacity of 180 mAh/g and a capacity retention rate of 80% after 100 charge/discharge cycles. A cell using positive electrode material B had an initial capacity of 180 mAh/g and a capacity retention rate of 88% after 100 charge/discharge cycles.

**[Table 1]**

| No. | Type of positive electrode | Cover amount (wt%) | Addition amount of acetic acid (wt%) | Solvent of slurry | pH of slurry | Initial capacity (%) | Capacity retention rate (%) |
|---|---|---|---|---|---|---|---|
| Ref. Ex. 1 | A | 0 | - | NMP | - | 100 | 80 |
| Example 1 | 1 | 1 | 8 | Water | 8.8 | 98 | 80 |
| Example 2 | 1 | 5 | 8 | Water | 7.7 | 96 | 84 |
| Example 3 | 1 | 10 | 8 | Water | 7.1 | 95 | 92 |
| Example 4 | 2 | 20 | 2 | Water | 6.6 | 96 | 93 |
| Ref. Ex. 2 | B | 0 | - | NMP | - | 100 | 88 |
| Example 5 | 3 | 1 | 5 | Water | 7.6 | 100 | 85 |
| Example 6 | 3 | 5 | 5 | Water | 7 | 100 | 93 |
| Example 7 | 3 | 10 | 5 | Water | 6.9 | 99 | 94 |
| Example 8 | 3 | 20 | 5 | Water | 6.5 | 99 | 95 |
| Example 9 | 3 | 1 | 2 | Water | 7.7 | 100 | 92 |
| Example 10 | 3 | 5 | 2 | Water | 7 | 99 | 96 |
| Example 11 | 3 | 10 | 2 | Water | 6.6 | 98 | 94 |
| Comp. Ex. 1 | A | 0 | 0 | Water | 13 | 26 | 3 |
| Comp. Ex. 2 | A | 0 | 8 | Water | 8.3 | 48 | 11 |
| Comp. Ex. 3 | B | 0 | 5 | Water | 7.6 | 78 | 66 |
| Comp. Ex. 4 | B | 0 | 2 | Water | 6.9 | 96 | 88 |

In the case of the aqueous slurry with no pH adjustment, its pH increased and reached 13. As a result, the initial capacity of the cell decreased to 26% of that of the reference examples, and deterioration progressed with increasing cycles. On the other hand, when the pH of the slurry was adjusted to about 7, the initial capacity of the cells improved significantly, exceeding 90% relative to that of the reference examples, with some reaching an equivalent level.

Furthermore, when the surface of the positive electrode material was covered, the cell performance was significantly improved. The pH of the slurry could be suppressed to about 8 in a cover amount of about 5% even without using the pH adjuster. In this case, the initial capacity of the cells was equivalent relative to that of the reference examples, and the capacity retention rate was better than that of the reference examples. In addition, the combined use of the pH adjuster increased the effect. For example, when 2 to 5% of the pH adjuster was added in a cover amount of about 1 to 5%, an initial capacity of almost 100% relative to that of the reference examples was achieved, and the capacity retention rate was also greatly improved.

### Explanation of Numerals

- 1, 8: case
- 2: plate spring
- 3: spacer
- 4: positive electrode
- 5: separator
- 6: negative electrode
- 7: gasket

## Claims

1. A slurry for positive electrodes of lithium-ion batteries, comprising a positive electrode material, a binder, a solvent and a pH adjuster, wherein
the positive electrode material comprises covered particles having lithium composite oxide particles and passivation film which covers at least a part of their surface,
the solvent comprises water,
the pH adjuster comprises an organic acid.

2. The slurry for positive electrodes of lithium-ion batteries according to claim 1, wherein the solvent is substantially free of organic solvent.

3. The slurry for positive electrodes of lithium-ion batteries according to claim 1, wherein the pH adjuster is substantially free of inorganic acid.

4. The slurry for positive electrodes of lithium-ion batteries according to claim 1, having an organic acid concentration of 2 to 8% by weight.

5. The slurry for positive electrodes of lithium-ion batteries according to claim 1, having a pH of 6 to 9.

6. The slurry for positive electrodes of lithium-ion batteries according to claim 1, wherein the passivation film has a cover amount of 1 to 20% by weight.

7. The slurry for positive electrodes of lithium-ion batteries according to claim 1, wherein the passivation film comprises aluminum oxide or magnesium oxide.

8. The slurry for positive electrodes of lithium-ion batteries according to claim 1, wherein the organic acid is at least one selected from the group consisting of acrylic acid, formic acid, citric acid, acetic acid, oxalic acid, lactic acid, pyruvic acid, malonic acid, propionic acid, maleic acid and butyric acid.

9. The slurry for positive electrodes of lithium-ion batteries according to claim 1, wherein the positive electrode active material comprises Ni:Co:Mn in a weight ratio of about 8:1:1.

10. A positive electrode of a lithium-ion battery obtained by using the slurry for positive electrodes of lithium-ion batteries according to claim 1.

11. A lithium-ion battery comprising the positive electrode of a lithium-ion battery according to claim 10.

12. A method for producing a slurry for positive electrodes of lithium-ion batteries, comprising mixing a positive electrode material having lithium composite oxide and passivation film which covers at least a part of its surface, water as a solvent, and organic acid as a pH adjuster.

13. A method for producing a positive electrode for lithium-ion batteries, comprising forming a layer of the slurry for positive electrodes according to claim 1 on a current collector composed of aluminum or an aluminum alloy, and drying it.
